# EUROPEAN PATENT SPECIFICATION

(11) **EP 1 447 294 B1**
(45) Date of publication and mention of the grant of the patent: **02.12.2009**
(21) Application number: 04003139.5
(22) Date of filing: 12.02.2004
(51) Int. Cl.: B60T 11/26, B60T 17/06, B60T 17/22

(54) **Reservoir union for a hydraulic master cylinder of a vehicle**
Hydraulischer Behälter für einen Hauptbremszylinder eines Fahrzeuges
Réservoir hydraulique pour un maître-cylindre pour véhicule automobile

(30) Priority: 13.02.2003 JP 2003034604
(43) Date of publication of application: 18.08.2004
(73) Proprietor: NISSIN KOGYO CO., LTD., Ueda-shi, Nagano-ken (JP)
(72) Inventor: Kanai, Atsushi c/o NISSIN KOGYO CO., LTD., Ueda-shi, Nagano-ken (JP)
(74) Representative: HOFFMANN EITLE

(56) References cited:
- EP-A- 1 142 769
- EP-A- 1 184 247
- EP-A- 1 375 284
- WO-A-02/053437
- FR-A- 2 814 509
- FR-A1- 2 810 097

## Description

### BACKGROUND OF THE INVENTION

### 1. Field of the Invention

The present invention relates to a reservoir union for a hydraulic master cylinder of a vehicle used for connecting a hydraulic master cylinder hydraulically operating a brake or a clutch of a vehicle of an automobile or the like and a reservoir for storing fluid, in details, relates to a reservoir union capable of excellently replenishing the fluid into the master cylinder.

### 2. Description of the Related Art

There is a prior art for supplying fluid from a reservoir attached to a vehicle body to a master cylinder via a hose in view of a relationship of a space of attaching to the vehicle body. According to the type, a reservoir union for connecting the hose connected to the reservoir and the master cylinder is interposed between the reservoir and the master cylinder.

The reservoir union is provided with a body connecting pipe fitted to attach to a union connecting boss projected from an upper side of a cylinder body of the master cylinder on a lower side thereof and a hose connecting pipe for connecting the hose connected to the reservoir on an upper side thereof and normally, the body connecting pipe and the hose connecting pipe are integrally formed by a pipe-like member formed in an L-like shape (refer to, for example, JP-U-58-152452 pagel, fig.2).

However, according to the above-described, an inner diameter of the hose and an inner diameter of the union connecting boss are constituted by previously set comparatively small diameters and therefore, an inner diameter of the pipe-like member in the L-like shape is comparatively small in accordance therewith. Therefore, in filling the fluid while exhausting air at inside of a brake or a clutch apparatus, performance of replenishing the fluid is poor and time is taken in the filling operation.

Further, an angle of the hose connecting pipe connected with the hose is changed depending on a position of attaching the reservoir tank to the vehicle body and therefore, the reservoir unit needs to form for respective kinds of vehicles, versatility thereof is low and cost is taken.

FR-A-2 810 097 discloses a reservoir union according to the preamble of claim 1.

EP-A-1 142 769 discloses a related reservoir union.

### SUMMARY OF THE INVENTION

Hence, it is an object of the present invention to provide a reservoir unit capable of carrying out filling operation in a short period of time by promoting performance of replenishing fluid in filling the fluid while exhausting air by a simple structure, having high versatility, reducing fabrication cost and capable of being molding with high accuracy by a resin.

In order to achieve the above-described object, the present invention provides a reservoir union for a hydraulic master cylinder of a vehicle for providing fluid stored in a reservoir to a master cylinder, comprising the features of claim 1.

Preferred optional features are recited in the dependent claims.

### BRIEF DESCRIPTION OF THE DRAWINGS

Fig. 1 is a plane view of the reservoir union showing a first embodiment of the present invention;
Fig. 2 is a sectional view taken along a line II-II of Fig. 1;
Fig. 3 is a sectional view taken along a line III-III of Fig. 1;
Fig. 4 is a sectional view taken along a line IV-IV of Fig. 1;
Fig. 5 is a perspective view showing a state of attaching the reservoir union showing the first embodiment of the present invention to a master cylinder;
Fig. 6 is a plane view of a reservoir union showing an embodiment (not part of the present invention);
Fig. 7 is a sectional view taken along a line VII-VII of Fig. 7;
Fig. 8 is a sectional side view of an essential portion of a reservoir union showing a second embodiment of the present invention and
Fig. 9 is a sectional side view of an essential portion of a reservoir union showing a third embodiment of the present invention.

### DETAILED DESCRIPTION OF THE PREFERRED EMBODIMENT

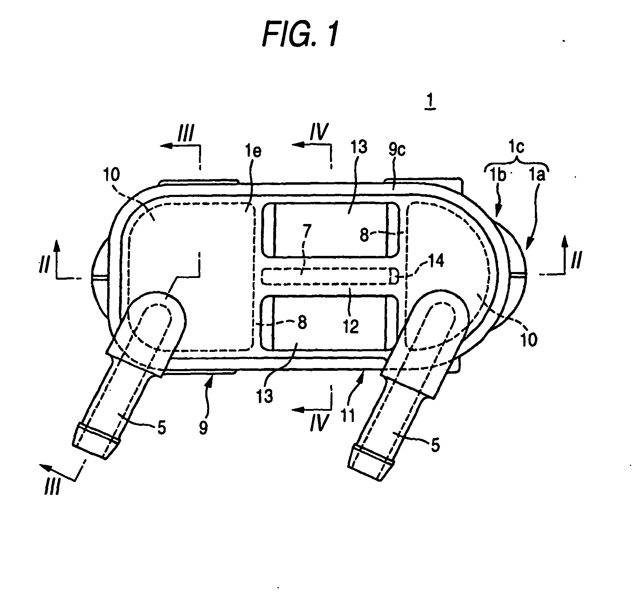

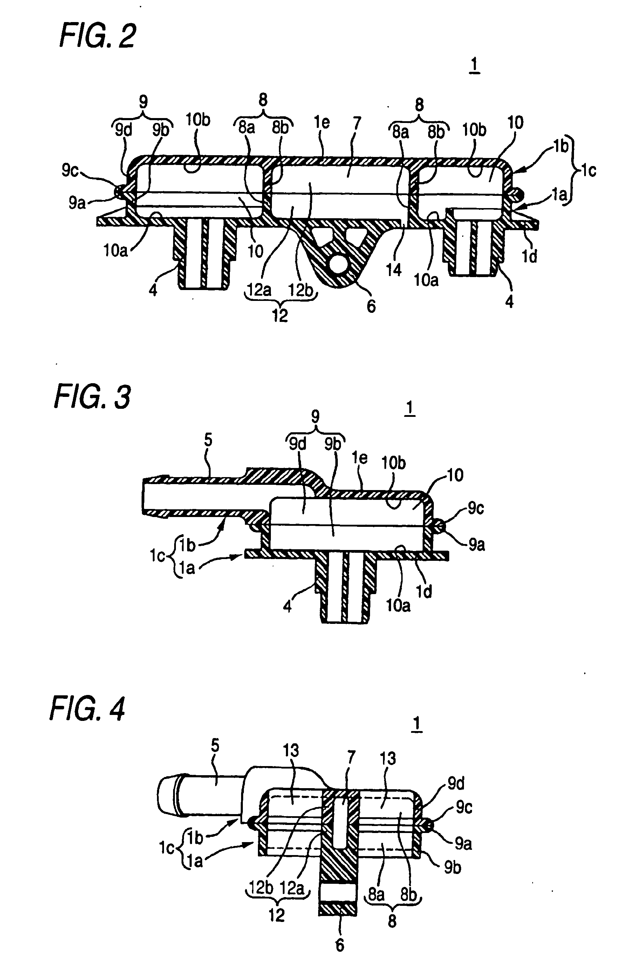

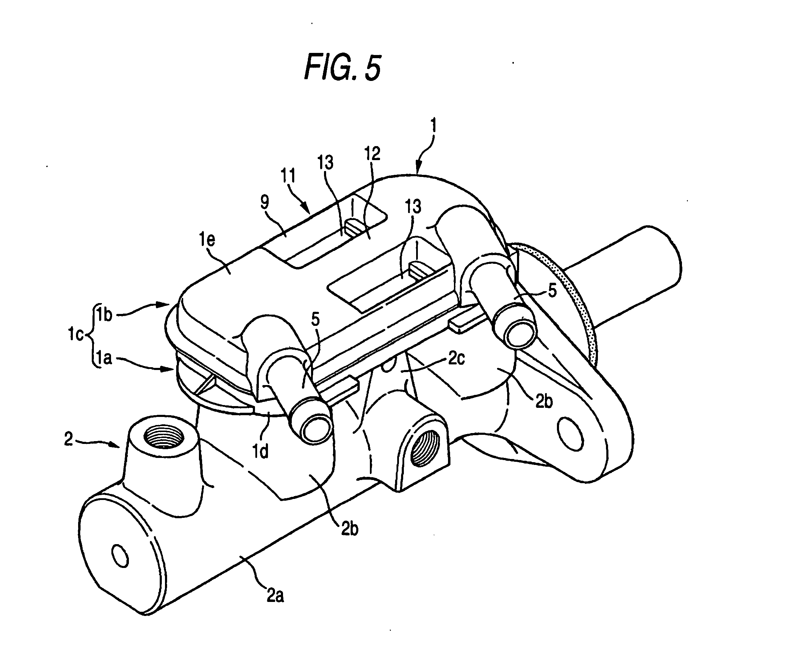

A detailed explanation will be given of respective embodiments of the invention in reference to the drawings. Fig. 1 through Fig. 5 show a first embodiment of the present invention, a reservoir union 1 is for connecting union connecting bosses 2b, 2b formed at a cylinder body 2a of a master cylinder 2 and hoses connected to a reservoir (both not illustrated) and fluid is supplied from the reservoir to inside of the master cylinder 2 via the hose and the reservoir union 1.

The master cylinder 2 is of a tandem type in which two hydraulic chambers, not illustrated, are partitioned at inside of the cylinder body 2a and the fluid pressure of which is increased by the hydraulic chambers is supplied individually to two brake systems, the union connecting bosses 2b, 2b are projected and provided on front and rear portions of an upper face of the cylinder body 2a and a plate-like union connecting flange 2c are projected and provided between the two union connecting bosses 2b, 2b in parallel with a cylinder axis. Each of the union connecting bosses 2b, 2b is formed in a cylindrical shape having a fitting hole at inside thereof and the fitting hole and inside of the cylinder body 2a are communicated by a through-hole having a small diameter.

The reservoir unit 1 is molded by a resin formed substantially in an elongated oval shape having a width in an up and down direction and inside thereof is hollow shape. On the reservoir union 1, body connecting pipes 4, 4 for fitting to the union connecting bosses 2b, 2b of the cylinder body 2a are projected and provided at a lower side thereof and hose connecting pipes 5, 5 are projected and provided at an upper side thereof in correspondence with positions of the body connecting pipes 4, 4 and a body connecting flange 6 to be overlapped with the union connecting flange 2c of the cylinder body 2a is projected and provided between the body connecting pipes 4, 4.

A hollow portion formed at inside of the reservoir union 1 is respectively formed with one partition wall 8 for fluid storing chamber orthogonal to the cylinder axis at a middle position of the body connecting pipe 4 the hose connecting pipe 5 and the body connecting flange 6 on one side. And other partition wall 8 for fluid storing chamber orthogonal to the cylinder axis at a middle position of the body connecting pipe 4 the hose connecting pipe 5 and the body connecting flange 6 on other side. Thereby, one fluid storing chamber 10 communicating with the body connecting pipe 4 and the hose connecting pipe 5 on one side is partitioned by the one partition wall 8 for the fluid storing chamber and an outer peripheral wall 9 and other fluid storing chamber 10 communicating with the body connecting pipe 4 and the hose connecting pipe 5 on other side is partitioned by the other partition wall 8 for the fluid storing chamber and the outer peripheral wall 9 on the other side.

A center rib 12 is provided in a direction of the center axis of a bridge beam portion 11 provided between the one fluid storing chamber 10 and the other fluid storing chamber 10, and two rectangular air gap portions 13, 13 partitioned by the center rib 12, the outer peripheral wall 9 and the partition walls 8, 8 for the fluid storing chambers are formed to penetrate in an up and down direction. Further, a bottom portion of a hollow chamber 7 formed at inside of the center rib 12 is bored with a through-hole 14 communicating with the hollow chamber 7.

According to the reservoir union 1 of the embodiment formed as described above, a reservoir union body 1c is formed by welding a lower division member 1a and an upper division member 1b made of a resin, a lower half of the reservoir union body 1c is constituted by the lower division member 1a and an upper half of the reservoir union body 1c is constituted by the upper division member 1b. An explanation will be given of constitutions of the lower division member 1a and the upper division member 1b of the reservoir union body 1c as follows.

The lower division member 1a is erected with an outer peripheral wall lower half portion 9b having a first welding flange 9a at a front end thereof at a surrounding of a bottom base portion 1d formed substantially in a elongated oval shape and the body connecting pipes 4, 4 and the body connecting flange 6 are projected and provided from a lower face of the bottom base portion 1d. Lower half portions 8a, 8a of the partition walls 8 for the fluid storing chambers are projected from the bottom base portion 1d at a middle position of the one body connecting pipe 4 and the body connecting flange 6 and a middle position of the other body connecting pipe 4 and the body connecting flange 6, and first recess portions 10a, 10a constituting lower halves of the fluid storing chambers 10, 10 are formed by the lower half portions 8a, 8a and the outer peripheral wall lower half portion 9b and the bottom base portion 1d. Further, at the bottom base portion 1d constituting the bridge beam portion 11, partition wall lower half portions 12a, 12a for forming the air gap portions 13, 13 and the center rib 12 are projected to be orthogonal to the lower half portions 8a, 8a of the partition walls 8 for the fluid storing chambers and the bottom base portion 1d constituting the bottom portion of the center rib 12 is bored with the through-hole 14.

The upper division 1b is hung with an outer peripheral wall upper half portion 9d having a second welding flange 9c at a front end thereof at a surrounding of a ceil base portion 1e formed substantially in an elongated oval shape and projected with the hose connecting pipes 5 from an upper face of the ceil base portion 1e. At positions of the upper division 1b in correspondence with the lower half portions 8a, 8a of the partition walls 8 for the fluid storing chambers formed at the lower division member 1a, upper half portions 8b, 8b of the partition walls 8 for the fluid storing chambers are hung from the ceil base portion 1e, and second recess portions 10b, 10b constituting upper halves of the fluid storing chambers 10 are formed by the upper hal f portions 8b, 8b and the outer peripheral wall upper half portion 9d and the ceil base portion 1e. Further, the ceil base portion 1e constituting the bridge beam portion 11 is formed with the air gap portions 13, 13 and hung with partition wall upper half portions 12b, 12b in correspondence with the partition wall lower half portions 12a, 12a of the lower division member 1a.

The reservoir union body 1c is formed by the lower division member 1a and the upper division member 1b, mentioned above, by respectively welding the first welding flange 9a and the second welding flange 9b, the lower half portions 8a, 8a and the upper half portions 8b, 8b of the partition walls 8, 8 for the fluid storing chambers, and the partition wall upper half portion 12a, 12a and the partition wall lower half portions 12b, 12b, and the reservoir union body 1c is formed with the fluid storing chambers 10, 10, the air gap portions 13, 13, the center rib 12 and the hollow chamber 7 by the welding.

Although according to the reservoir union 1 formed in this way, the body connecting pipes 4, 4 and the hose connecting pipes 5, 5 are formed by comparatively small diameters in accordance with inner diameters of the union connecting bosses 2b, 2b and the hoses, since the fluid storing chambers 10, 10 for storing the fluid are formed between the body connecting pipes 4, 4 and the hose connecting pipes 5, 5, in filling the fluid while exhausting air at inside of a brake or a clutch apparatus, performance of replenishing the fluid is promoted and the filling operation can be carried out in a short period of time.

Further, the reservoir union body 1c is formed by welding the lower division member 1a and the upper division member 1b molded by a resin and therefore, the reservoir union body 1c can inexpensively fabricated and a reduction in fabrication cost can be achieved. Further, since the bottom base portion 1d constituting the bottom portion of the center rib 12 is bored with the through-hole 14, in butting to weld the lower division member 1a and the upper divisionmember 1b, air at inside thereof can be bled from the through-hole 14 and the lower division member 1a and the upper division member 1b can be welded accurately and simply. Further, the bridge beam portion 11 can be prevented the wall from getting thicker by providing the air gap portions 13, 13 at the bridge beam portion 11 formed between the fluid storing chambers 10, 10 and the lower division member 1a and the upper division member 1b can be formed substantially by a uniform wall thickness and therefore, in molding the two division members 1a, 1b by a resin, the lower division member 1a and the upper division member 1b can accurately be molded without producing a sink mark.

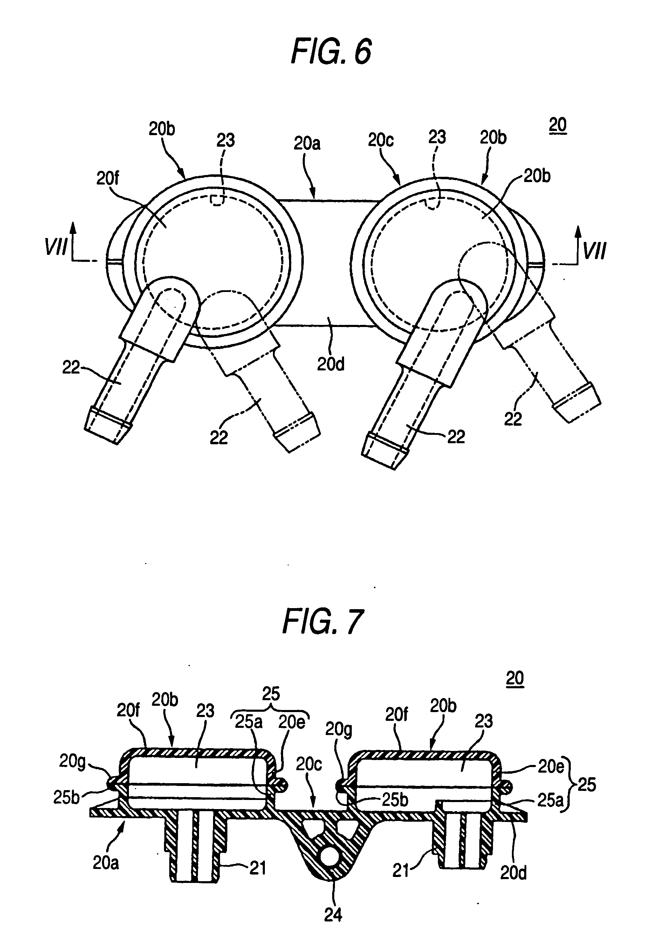

Next, an embodiment, which is not part of the present invention, will be explained in reference to Fig. 6 and Fig. 7. According to a reservoir union 20 of the embodiment, as well as the first embodiment, a reservoir union body 20c is formed by welding a lower division member 20a and an upper division member 20b made of a resin and two of the upper division members 20b, 20b are welded thereto in correspondence with body connecting pipes 21, 21 provided at the lower division member 20a. The upper division members 20b, 20b are respectively provided with single of hose connecting pipes 22 and fluid storing chambers 23, 23 having a section in a shape of a perfect circle are formed between the body connecting pipes 21, 21 and the hose connecting pipes 22, 22.

On the lower division member 20a, the body connecting pipes 21, 22 and a body connecting flange 24 are projected and provided from a lower face of a bottom base portion 20d formed in a plate-like shape. On an upper face of the bottom base portion 20d, lower half portions 25a, 25a of partition walls 25 for fluid storing chambers are projected and provided in a cylindrical shape to respectively surround the body connecting pipes 21, 21, and first recess portions 23a, 23a constituting lower halves of the fluid storing chambers 23, 23 are formed by the lower half portions 25a, 25a and the bottom base portion 20d. Further, front ends of the lower half portions 25, 25a are respectively formed with first welding flanges 25b.

The upper division members 20b, 20b are cylindrical members having outer peripheral walls 20e in a cylindrical shape having a diameter as same as that of the lower half portions 25a, 25a of the respective partition walls 25 for the fluid storing chambers and ceil portions 20f covering upper portions of the outer peripheral walls 20e, second welding flanges 20g are respectively formed at front ends of the outer peripheral walls 20e and the respective ceil portions 20f are respectively formed with the hose connecting pipes 22. According to the embodiment, the outer peripheral walls 20e, 20e of the upper division members 20b, 20b serve also as upper half portions of the partition walls 25 for the fluid storing chambers and the second recess portions 23b, 23b constituting upper halves of the fluid storing chambers 23, 23 are formed by the outer peripheral walls 20e, 20e and the ceil portions 20f, 20f.

According to the above-described embodiment, the fluid storing chambers 23, 23 having the sections in the shape of the perfect circle are respectively formed between the body connecting pipes 21 and the hose connecting pipes 22 by welding the second welding flanges 20g, 20g formed at the outer peripheral walls 20e, 20e of the upper division members 20b, 20b to the first welding flanges 25b, 25b of the lower half portions 20a, 20a of the partition walls 25 for the fluid storing chambers at the lower division member 20a.

According to the embodiment, the fluid storing chambers 23, 23 are formed by the sections in the shape of the perfect circle, matching faces of the lower half portions 25a, 25a of the partition walls 25, 25 for the fluid storing chambers of the lower division member 20a and the outer peripheral walls 20e, 20e of the upper division members 20b, 20b are constituted by a shape of the same perfect circle and therefore, the hose connecting pipes 22 can be welded thereto by setting directions thereof arbitrarily (for example, directions shown by imaginary lines of Fig. 6) . Thereby, even in a case in which a position of attaching the reservoir tank to the vehicle body differs by the kind of the vehicle, the case can be dealt with by using the same lower division member 20a and the same upper division members 20b, 20b and changing angles of welding the upper division members 20b, 20b to the lower division member 20a, the versatility of the reservoir union 20 is promoted and a reduction in fabrication cost can be achieved.

Further,although accordingto theabove-describedsecond embodiment, also the matching faces of the lower half portion of the partition wall for the fluid storing chamber and the outer peripheral wall of the upper division member are constituted by the circular shape by constituting the section of the fluid storing chamber in the shape of the perfect circle, according to the invention, at least the matching faces of the lower half portion and the outer peripheral wall of the upper division member may be constituted in the circular shape and a sectional shape of the fluid storing chamber may not be constitutedby the circular shape. Further, the matching faces of the lower half portion and the outer peripheral wall of the upper divisionmember maybe constituted by a section in a regular polygonal shape.

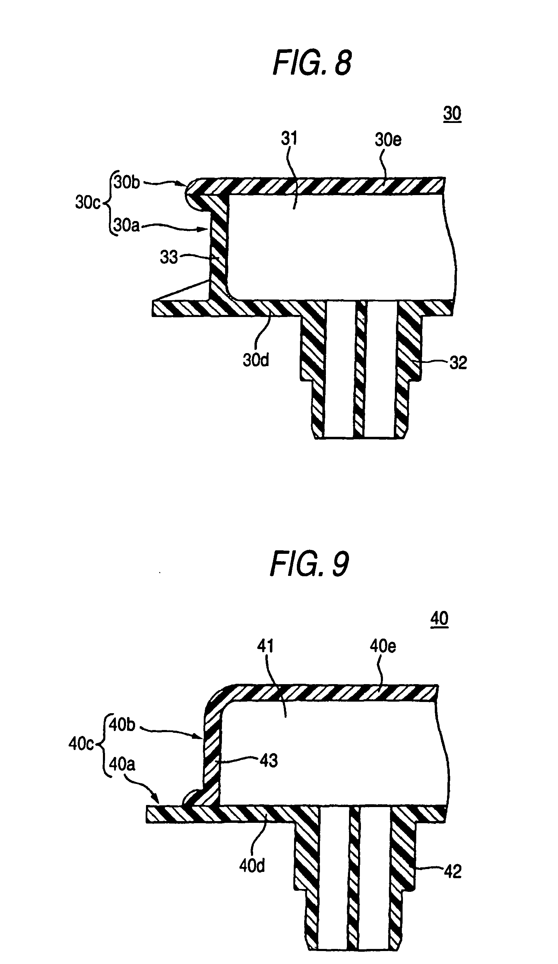

Fig. 8 shows a second embodiment of the invention and a reservoir union 30 of the embodiment is formed with a reservoir union body 30c by welding a lower division member 30a and an upper division member 30b made of a resin and is formed with a recess portion for forming fluid storing chamber 31 on a side of the lower division member 30a. On the lower division member 30a, a pair of body connecting pipes 32 from a bottom base portion 30d are projected and provided on a lower side thereof, proj ected with an outer peripheral wall 33 and a partition wall for the fluid storing chamber on an upper side thereof and a recess portion forming the fluid storing chamber 31 is formed by the partition wall for the fluid storing chamber and the outer peripheral wall 33 and the bottom base portion 30d.

On the upper division member 30b, a pair of hose connecting pipes is projected and provided on an upper portion of a ceil base portion 30e in a plate-like shape, an upper opening of the recess portion forming the fluid storing chamber 31 is covered by the upper division member 31b by welding the ceil base portion 30e to the lower division member 30a and the reservoir union body 30c is formed with the fluid storing chamber 31 for communicating the body connecting pipe and the hose connecting pipe.

Fig. 9 shows a third embodiment of the present invention, a reservoir union 40 of the embodiment is formed with a reservoir union body 40c by welding a lower division member 40a and an upper division member 40b made of a resin and a recess portion for forming fluid storing chamber 41 is formed on a side of the upper division 40a. On the lower division member 40a, a pair of body connecting pipes 42 are projected and provided on a lower side a bottom base portion 40d in a plate-like shape.

On the upper division member 40b, a pair of hose connecting pipes are projected and provided at a ceil base portion 40e in a plate-like shape, an outer peripheral wall 43 is hung and provided from a surrounding of the ceil base portion 40e, a . partition wall of the fluid storing chamber and formed with a recess portion for forming the fluid storing chamber 41 is formed by the partition wall for the fluid storing chamber and the outer peripheral wall 43 and the ceil base portion 40e. When the lower division member 40a and the upper division member 40b formed are welded in this way and a lower opening of a recess portion forming the fluid storing chamber 41 formed at the upper division 40b is covered by the lower division member 40a. In the reservoir union body 40c, the fluid storing chamber 41 for communicating the body connecting pipe 42 and the hose connecting pipe is formed.

Further, the reservoir union of the present invention is not limited to be applied to the tandem type master cylinder as in the above-described respective embodiments but is applicable.also to a single type master cylinder.

While there has been described in connection with the preferred embodiments of the present invention, it will be obvious to those skilled in the art that various changes and modification may be made therein without departing from the present invention, and it is aimed, therefore, to cover in the appended claim all such changes andmodifications as fall within the true spirit and scope of the present invention.

As has been explained above, according to the invention, by providing the fluid storing chamber for storing the fluid between the body connecting pipe and the hose connecting pipe of the reservoir union, in filling the fluid while exhausting air, performance of replenishing the fluid can be promoted and .the filling operation can be carried out in a short period of time.

Further, since the reservoir union body is formed by welding the lower division member and the upper division member made of a resin, the reservoir main body can inexpensively be formed. Further, by respectively forming the upper division members having single ones of the hose connecting pipes in accordance with a number of the union connecting bosses, respectively welding the upper division members to the lower division members in correspondence with positions of forming the union connecting bosses and forming the fluid storing chambers by the section in the same regular polygonal shape or in.the same circular shape, the direction of the hose connecting pipe can be changed pertinently in accordance with the kind of the vehicle used, the versatility of the reservoir union can be promoted and a reduction in the fabrication cost can be achieved.

Particularly, according to the constitution applied to the tandem type master cylinder, by forming the air gap portion at the bridge beam portion provided between the both fluid storing chambers of the reservoir union body to thereby reduce the wall of the bridge beam portion, inmolding the lower division member and the upper division member of the reservoir union by a resin, a wall thickness of the resin is made to be substantially uniform, there is not a possibility of producing a sink mark and the lower division member and the upper division member can accurately be molded. Further, by forming the through-hole communicatingwith the hollow chamber of the bridge beam portion at the lower division member forming the hollow chamber of the bridge beam portion, air can be bled from the through-hole in welding the upper division member and the lower division member and the upper division member and the lower division member can be welded simply and accurately.

## Claims

1. A reservoir union (1, 30, 40) for a hydraulic master cylinder (2) of a vehicle for providing fluid stored in a reservoir to the master cylinder (2), comprising:
a reservoir union body (1c, 30c, 40c);
two body connecting pipes (4) provided on the reservoir union body (1c, 30c, 40c) so as to connect with union connecting bosses (2b) projecting and provided on an upper side of a cylinder body (2a) of the master cylinder (2),
two hose connecting pipes (5) provided on the reservoir union body (1c, 30c, 40c) so as to connect with hoses connected with the reservoir storing the fluid, and
two fluid storing chambers (10, 31, 41) each communicating with one of the body connecting pipes (4 ) and one of the hose connecting pipes (5), the two fluid storing chambers (10, 31, 41) being mutually independent, **wherein**
the two body connecting pipes (4) are projecting and provided on a lower side of the reservoir union body (1c, 30c, 40c),
the two hose connecting pipes (5) are projecting and provided on an upper side of the reservoir union body (1c, 30c, 40c), and
the two fluid storing chambers (10, 31, 41) are both formed in the reservoir union body (1c, 30c, 40c),
a bridge beam portion (11) is provided between the two fluid storing chambers (10) of the reservoir union body (1c), and
an air gap portion (13) for reducing a wall thickness thereof is formed on the bridge beam portion (11).

2. A reservoir union (1, 30, 40) for a hydraulic master cylinder (2) of a vehicle as set forth in claim 1, in which
the reservoir union body (1c, 30c, 40c) is formed by welding a lower division member (1a, 30a, 40a) made of a resin and an upper division member (1b, 30b, 40b) made of a resin,
the lower division member (1a, 30a, 40a) has the body connecting pipes (4, 32, 42),
the upper division member (1b, 30b, 40b) has the hose connecting pipes (5), and
a recessed portion (10a and 10b) is provided on at least one of the lower division member (1a, 30a, 40a) and upper division member (1b, 30b, 40b), the recessed portion (10a and 10b) forming the fluid storing chamber (10, 31, 41) by welding both of the division members (1a, 30a, 40a and 1b, 30b, 40b).

3. A reservoir union (1, 30, 40) for a hydraulic master cylinder of a vehicle as set forth in claim 1, in which
the reservoir union body (1c, 30c, 40c) is formed by welding the lower division member (1a, 30a, 40a) made of a resin and the upper division member (1b, 30b, 40b) made of a resin,
the lower division member (1a, 30a, 40a) has two of the body connecting pipes (4, 32, 42),
the upper division member (1b, 30b, 40b) has two of the hose connecting pipes (5), and
a recessed portion (10a and 10b) is provided on at least one of the lower division members (1a, 30a, 40a) or the upper division members (1b, 30b, 40b), the recessed portion (10a and 10b ) forming the fluid storing chamber (10, 31, 41) by welding both of the division members (1a, 30a, 40a and 1b, 30b, 40b).

4. A reservoir union (1) for a hydraulic master cylinder of a vehicle as set forth in any one of the preceding claims, in which
a hollow chamber (7) is formed in the bridge beam portion (11), and
a bottom portion (14) of the hollow chamber (7) is bored with a through hole (14) to let air bleed out of the hollow chamber (7) in welding the upper division member (1b) and the lower division member (1a).

## Patentansprüche

1. Behältereinheit (1, 30, 40) für einen Hydraulikhauptzylinder (2) eines Fahrzeuges zum zur Verfügung stellen von in einem Reservoir gespeichertem Fluid an den Hauptzylinder (2), umfassend:
ein Behältereinheitsgehäuse (1c, 30c, 40c)
zwei Gehäuseverbindungsrohre (4), die an dem Behältereinheitsgehäuse (1c, 30c, 40c) vorgesehen sind, um mit den beiden Einheitsverbindungsanschlussstücken (2b), die sich von einer Oberseite eines Zylinderkörpers (2a) des Hauptzylinders (2) erstrecken und dort vorgesehen sind, verbunden zu sein,
zwei Schlauchverbindungsrohre (5), die auf dem Behältereinheitsgehäuse (1c, 30c, 40c) vorgesehen sind, um mit Schläuchen verbunden zu sein, die mit dem das Fluid speichernden Reservoir verbunden sind, und
zwei Fluidspeicherkammern (10, 31, 41), die jeweils mit einem der Gehäuseverbindungsrohre (4) und einem der Schlauchverbindungsrohre (5) verbunden sind, wobei die beiden Fluidspeicherkammern (10, 31, 41) voneinander unabhängig sind,
wobei sich die beiden Gehäuseverbindungsrohre (4) auf einer Unterseite des Behältereinheitsgehäuses erstrecken und dort vorgesehen sind (1c, 30c, 40c),
wobei sich die beiden Schlauchverbindungsrohre (5) auf einer Oberseite des Behältereinheitsgehäuses (1c, 30c, 40c) erstrecken und dort vorgesehen sind, und
wobei die beiden Fluidspeicherkammern (10, 31, 41) in dem Behältereinheitsgehäuse ausgebildet sind,
wobei ein Stegträgerabschnitt (11) zwischen den beiden Fluidspeicherkammern (10) des Behältereinheitsgehäuses (1c) vorgesehen ist, und
ein Luftspaltabschnitt (13) zum Reduzieren der Wanddicke davon auf dem Stegträgerabschnitt (11) ausgebildet ist.

2. Behältereinheit (1, 30, 40) für einen Hydraulikhauptzylinder (2) eines Fahrzeuges nach Anspruch 1, bei dem
der Behältereinheitskörper (1c, 30c, 40c) durch Schweißen eines unteren, aus einem Harz hergestellten Teilungselementes (1a, 30a, 40a) und eines oberen, aus einem Harz hergestellten Teilungselementes (1b, 30b, 40b) herstellt wird,
wobei das untere Teilungselement (1a, 30a, 40a) die Gehäuseverbindungsrohre (4, 32, 42) aufweist,
wobei das obere Teilungselement (1b, 30b, 40b) die Schlauchverbindungsrohre (5) aufweist, und
wobei ein Aussparungsabschnitt (10a und 10b) auf dem unteren Teilungselement (1a, 30a, 40a) und/oder dem oberen Teilungselement (1b, 30b, 40b) vorgesehen ist, wobei der Aussparungsabschnitt (10a und 10b) die Fluidspeicherkammer (10, 31, 41) durch Schweißen der beiden Teilungselemente (1a, 30a, 40a und 1b, 30b, 40b) ausbildet.

3. Behältereinheit (1, 30, 40) für einen Hydraulikhauptzylinder eines Fahrzeuges nach Anspruch 1, bei dem
der Behältereinheitskörper (1c, 30c, 40) durch Schweißen des unteren, aus einem Harz hergestellten Teilungselementes (1a, 30a, 40) und des oberen, aus einem Harz hergestellten Teilungselementes (1b, 30b, 40b) hergestellt wird,
das untere Teilungselement (1a, 30a, 40a) zwei der Gehäuseverbindungsrohre (4, 32, 42) aufweist,
das obere Teilungselement (1b, 30b, 40b) zwei der Schlauchverbindungsrohre (5) aufweist, und
wobei ein Aussparungsabschnitt (10a und 10b) auf dem unteren Teilungselement (1a, 30a, 40a) und/oder dem oberen obere Teilungselement (1b, 30b, 40b) vorgesehen ist, wobei der Aussparungsabschnitt (10a und 10b) die Fluidspeicherkammer (10, 31, 41) durch Schweißen der beiden Teilungselemente (1a, 30a, 40a und 1b, 30b, 40b) ausbildet.

4. Behältereinheit (1) für einen Hydraulikhauptzylinder eines Fahrzeuges nach einem der vorhergehenden Ansprüche, bei dem
eine Hohlkammer (7) in dem Stegträgerabschnitt (11) ausgebildet ist, und
ein Bodenabschnitt (14) der Hohlkammer (7) mit einer Durchgangsbohrung (14) durchbohrt ist, um durch Schweißen des oberen Teilungselementes (1b) und des unteren Teilungselementes (1a) Luft aus der Hohlkammer (7) zu entlüften.

## Revendications

1. Raccord union de réservoir (1, 30, 40) pour un maître-cylindre hydraulique (2) d'un véhicule pour fournir un fluide stocké dans un réservoir au maître-cylindre (2), comprenant :
un corps de raccord union de réservoir (1c, 30c, 40c) ;
deux tubes de raccordement de corps (4) disposés sur le corps de raccord union de réservoir (1c, 30c, 40c) de façon à se raccorder à des protubérances de connexion de raccord union (2b) en saillie et disposées sur un côté supérieur d'un corps de cylindre (2a) du maître-cylindre (2),
deux tubes de raccordement de conduit (5) disposés sur le corps de raccord union de réservoir (1c, 30c, 40c) de façon à se raccorder à des conduits reliés au réservoir stockant le fluide, et
deux chambres de stockage de fluide (10, 31, 41), chacune communiquant avec l'un des tubes de raccordement de corps (4) et l'un des tubes de raccordement de conduit (5), les deux chambres de stockage de fluide (10, 31, 41) étant mutuellement indépendantes,
dans lequel
les deux tubes de raccordement de corps (4) sont en saillie et disposés sur un côté inférieur du corps de raccord union de réservoir (1c, 30c, 40c),
les deux tubes de raccordement de conduit (5) sont en saillie et disposés sur un côté supérieur du corps de raccord union de réservoir (1c, 30c, 40c), et
les deux chambres de stockage de fluide (10, 31, 41) sont toutes les deux formées dans le corps de raccord union de réservoir (1c, 30c, 40c),
une partie formant barre de liaison (11) est prévue entre les deux chambres de stockage de fluide (10) du corps de raccord union de réservoir (1c), et
une partie formant espacement d'air (13) pour réduire son épaisseur de paroi est formée sur la partie formant barre de liaison (11).

2. Raccord union de réservoir (1, 30, 40) pour un maître-cylindre hydraulique (2) d'un véhicule selon la revendication 1, dans lequel :
le corps de raccord union de réservoir (1c, 30c, 40c) est formé en soudant un élément de séparation inférieur (1a, 30a, 40a) fait d'une résine et un élément de séparation supérieur (1b, 30b, 40b) fait d'une résine,
l'élément de séparation inférieur (1a, 30a, 40a) possède les tubes de raccordement de corps (4, 32, 42),
l'élément de séparation supérieur (1b, 30b, 40b) possède les tubes de raccordement de conduit (5), et
une partie en retrait (10a et 10b) est prévue sur l'un au moins de l'élément de séparation inférieur (1a, 30a, 40a) et de l'élément de séparation supérieur (1b, 30b, 40b), la partie en retrait (10a et 10b) formant la chambre de stockage de fluide (10, 31, 41) en soudant les deux éléments de séparation (1a, 30a, 40a et 1b, 30b, 40b).

3. Raccord union de réservoir (1, 30, 40) pour un maître-cylindre hydraulique d'un véhicule selon la revendication 1, dans lequel :
le corps de raccord union de réservoir (1c, 30c, 40c) est formé en soudant l'élément de séparation inférieur (1a, 30a, 40a) fait d'une résine et l'élément de séparation supérieur (1b, 30b, 40b) fait d'une résine,
l'élément de séparation inférieur (1a, 30a, 40a) possède deux des tubes de raccordement de corps (4, 32, 42),
l'élément de séparation supérieur (1b, 30b, 40b) possède deux des tubes de raccordement de conduit (5), et
une partie en retrait (10a et 10b) est prévue sur l'un au moins des éléments de séparation inférieurs (1a, 30a, 40a) ou des éléments de séparation supérieurs (1b, 30b, 40b), la partie en retrait (10a et 10b) formant la chambre de stockage de fluide (10, 31, 41) en soudant les deux éléments de séparation (1a, 30a, 40a et 1b, 30b, 40b).

4. Raccord union de réservoir (1) pour un maître-cylindre hydraulique d'un véhicule selon l'une quelconque des revendications précédentes, dans lequel :
une chambre creuse (7) est formée dans la partie formant barre de liaison (11), et
une partie de fond (14) de la chambre creuse (7) est percée avec un trou traversant (14) pour laisser l'air sortir de la chambre creuse (7) lors du soudage de l'élément de séparation supérieur (1b) et de l'élément de séparation inférieur (1a).
